# EUROPÄISCHE PATENTSCHRIFT

(11) **EP 1 835 990 B1**
(45) Veröffentlichungstag und Bekanntmachung des Hinweises auf die Patenterteilung: **16.06.2010**
(21) Anmeldenummer: 05850151.1
(22) Anmeldetag: 13.12.2005
(51) Int. Cl.: B01J 19/24, B01B 1/00

(54) **VORRICHTUNG UND VERFAHREN ZUM BEREITSTELLEN EINES HOMOGENEN GEMISCHES AUS BRENNSTOFF UND OXIDATIONSMITTEL**
DEVICE AND METHOD FOR PREPARING A HOMOGENEOUS MIXTURE CONSISTING OF FUEL AND OXIDANTS
DISPOSITIF ET PROCEDE POUR METTRE A DISPOSITION UN MELANGE HOMOGENE DE CARBURANT ET D'AGENT D'OXYDATION

(30) Priorität: 14.01.2005 DE 102005001900
(43) Veröffentlichungstag der Anmeldung: 26.09.2007
(73) Patentinhaber: Enerday GmbH, 82131 Stockdorf (DE)
(72) Erfinder: KAH, Stefan, 17033 Neubrandenburg (DE); LINDERMEIR, Andreas, 17034 Neubrandenburg (DE); ENGEL, Robert, 17039 Wulkenzin (DE)
(74) Vertreter: Schumacher & Willsau
(86) Internationale Anmeldenummer: PCT/DE2005/002254
(87) Internationale Veröffentlichungsnummer: WO 2006/074622

(56) Entgegenhaltungen:
- US-A1- 2001 026 777
- US-A1- 2004 009 104
- US-B1- 6 444 179

## Beschreibung

Die Erfindung betrifft eine Vorrichtung zum Bereitstellen eines homogenen Gemisches aus Brennstoff und Oxidationsmittel und zum Oxidieren des Brennstoffs, mit Mitteln zum Zuführen von flüssigem Brennstoff zu einem Verdampfer, Mittel zum Zuführen von gasförmigem Oxidationsmittel in eine dem Verdampfer nachgelagerte Mischzone und einer der Mischzone nachgelagerten Reaktionszone, wobei in der Reaktionszone eine gepackte Struktur angeordnet ist.

Die Erfindung betrifft weiterhin ein Verfahren zum Bereitstellen eines homogenen Gemisches aus Brennstoff und Oxidationsmittel und zum Oxidieren des Brennstoffs, mit den Schritten: Zuführen von flüssigem Brennstoff zu einem Verdampfer, Zuführen von gasförmigem Oxidationsmittel und verdampftem Brennstoff in eine dem Verdampfer nachgelagerte Mischzone, Vermischen von Oxidationsmittel und Brennstoff in der Mischzone und Einleiten des in der Mischzone entstandenen Gemisches in eine Reaktionszone, wobei in der Reaktionszone eine gepackte Struktur angeordnet ist, durch die das gesamte Gemisch beziehungsweise bereits entstandene Reaktionsprodukte hindurchgeleitet werden.

Flüssige Brennstoffe wie Diesel, Heizöl, Benzin und Kerosin stellen heutzutage die wichtigste Energiequelle dar, um Wärme, mechanische Arbeit und elektrischen Strom zu erzeugen. Dies wird z. B. bei der Verbrennung in Kraftfahrzeugen, Standheizungen und Haushaltsbrennern genutzt. Bei Brennstoffzellensystemen hingegen werden flüssige Kohlenwasserstoffe nicht vollständig verbrannt, sondern z. B. durch partielle Oxidationsreaktionen in Wasserstoff umgewandelt. Beiden Reaktionstypen ist gemeinsam, dass der flüssige Brennstoff zunächst in die Gasphase überführt und in einer Mischkammer mit Luft vermischt werden muss, um anschließend in der Reaktionskammer umgewandelt zu werden. Dabei wird ein möglichst homogenes Brennstoff-Luft-Gemisch angestrebt, da mit zunehmender Homogenität der Anteil unerwünschter Emissionen in Form von beispielsweise Ruß, NOₓ und CO reduziert werden kann. CO als Reaktionsprodukt ist im Rahmen eines Reformierungsprozesses erwünscht, während es als Produkt eines Verbrennungsprozesses unerwünscht ist.

Bei modernen Brennertypen und Oxidationsreaktoren sind Misch- und Reaktionskammer oftmals durch eine Flammenrückschlagsperre voneinander getrennt, so dass bei Einsatz von selbstzündenden Brennstoffen die Oxidationsreaktion nicht schon innerhalb der Mischkammer beginnt und sich dort nachteilig auswirkt.

Die Verdampfung des flüssigen Kraftstoffes kann durch unterschiedliche Verfahren erfolgen:

Gemäß z. B. der DE 39 146 11 C2 erfolgt die Kraftstoffverdampfung in Fahrzeugheizungen auf der Oberfläche von Metallfaservliesen oder ähnlich strukturierten Oberflächen, beispielsweise Geweben. Der flüssige Kraftstoff wird dabei auf ein heißes Metallfaservlies aufgegeben, dort verteilt und dann verdampft. Nach der Verdampfung wird der Kraftstoff in einer Mischkammer mit Luft vermischt und homogenisiert. Die Brennluftzufuhr in die Brennkammer erfolgt dabei stufenweise durch mehrere Lufteintrittsbohrungen in der Brennkammerwand. An diesen Stellen können sich dann Flammen ausbilden und aufgrund von Wärmeleitung, Strahlung und Konvektion letztlich die notwendige Wärme zum Erhalt des Verdampfungsprozesses bereitstellen.

Allerdings sind im Zusammenhang mit der Kraftstoffverdampfung mittels Metallfaservliesen Nachteile zu verzeichnen. Eigene Messungen ergaben bei der Dieselverdampfung sehr hohe Oberflächentemperaturen (bis zu 1100 °C) auf einem Metallfaservlies, das heißt insbesondere oberhalb von 400 °C, wobei ab dieser Temperatur in merklichem Umfang Crackreaktionen ablaufen und Rußbildung zu verzeichnen ist. Nachteilig ist, dass der Kraftstoff nur an der Vliesoberfläche in Kontakt mit Luft treten und somit oxidieren kann. Zusätzlich wird aufgrund der gestuften Luftzufuhr der größte Anteil der Brennluft deutlich nach der Vliesverdampfung zugeführt. Die entsprechend geringe Luftzahl an der Vliesoberfläche führt zur Ablagerungsbildung auf dem Verdampfer, die einen stabilen Betrieb desselben erschweren und dessen Lebensdauer mindern. Es herrschen Reaktionsbedingungen, welche vergleichbar mit denjenigen des Steamcracking-Prozesses sind und eine Rußbildung zur Folge haben, was im Folgenden kurz erläutert wird.

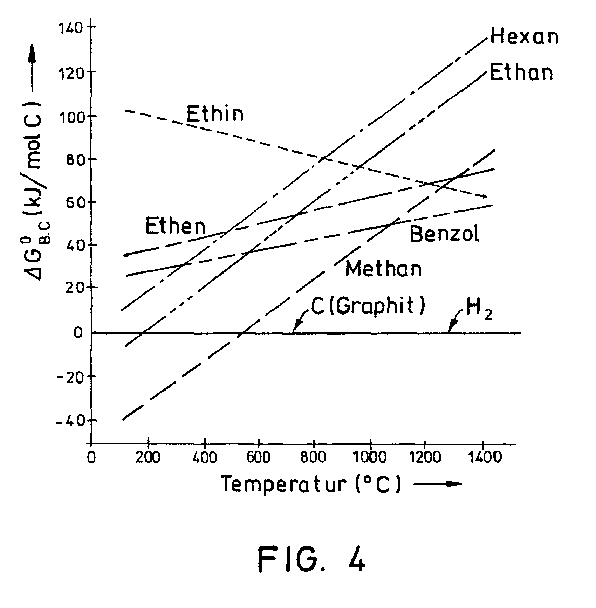

Beim Steamcracken handelt es sich um ein thermisches Crackverfahren in der Petrochemie, das in Gegenwart von Wasserdampf durchgeführt wird. Dabei wird meist Naphtha, eine leichte Benzinfraktion, mit Wasserdampf bei ca. 800-1400 °C innerhalb von außen befeuerten Crackrohrschlangen nicht-katalytisch gecrackt, um reaktionsfähige niedermolekulare Verbindungen wie Ethen und Propen zu erzeugen. Weitere gebildete technisch interessante Nebenprodukte sind unter anderem Aromaten (Benzol, Toluol, Xylol). Ziel des Steamcrackens ist es, die in der chemischen Industrie benötigten kurzkettigen Olefine herzustellen. Wie man in Figur 4 erkennen kann, werden diese jedoch erst bei hohen Temperaturen gebildet. Die Bildung von Ethen aus Ethan ist oberhalb von etwa 700 °C begünstigt, und die Bildung von Ethin aus Ethen findet oberhalb von 1200 °C statt. Daher ist es verständlich, dass man zur Erzeugung von Ethen und Propen Temperaturen von 800 bis 900 °C (Mitteltemperatur-Pyrolyse) verwendet, während die Bildung von Acetylen bei Temperaturen oberhalb von 1300 °C (Hochtemperaturpyrolyse) erfolgt. Ebenso ist aus Figur 4 ersichtlich, dass die Kohlenwasserstoffe bevorzugt in die Elemente C (Ruß) und H zerfallen. Um das Ausmaß dieser unerwünschte Folgereaktion zu verringern, muss das Reaktionsgemisch nach der optimalen Reaktionszeit (0,2 bis 0,5 s) möglichst schnell (0,1 s) so weit abgekühlt werden, dass die Bildungsgeschwindigkeit dieser unerwünschten Produkte gegen Null geht. Dadurch wird die Produktzusammensetzung nicht durch das thermodynamische Gleichgewicht sondern durch die langsame Kinetik kontrolliert.

Die genannten Verbindungen sind bei den im Steamcracker herrschenden Betriebsbedingungen allerdings sehr reaktiv und neigen zu Kondensations- und Polymerisationsreaktionen, so dass letztlich auch Ruß gebildet wird, welcher die Reaktionsrohre belegt, den entsprechenden Wärmedurchgang durch diese verschlechtert und damit einen Austausch der Crackrohrschlangen in regelmäßigen Abständen erfordert. Das Einsatzprodukt Wasserdampf wird zugegeben, um eine gute radiale Wärmeverteilung im Rohr zu gewährleisten, durch Verdünnung den Partialdruck abzusenken, damit die Bildung der Crackprodukte zu favorisieren und eine Umwandlung der zuvor gebildeten, unerwünschten höhermolekularen Verbindungen (Koks) zu gewährleisten.

Crackreaktionen können auch heterogen katalysiert werden, z. B. durch Oberflächenmetallatome, sogenannte aktive Zentren. In C. H. Bartholomew, Applied Catal. A Gen. 212 (2001) 17 - 60 ist die katalytische Wirkung von z. B. Nickel, Eisen, Kobalt beim Steam-Reforming von Methan und anderen Kohlenwasserstoffen beschrieben.

Sind entsprechend hohe Temperaturen im Verdampfer in der Gasphase anzutreffen, finden Pyrolysereaktionen dort ihren Fortgang. An katalytisch aktiven Oberflächen (Vlies, Verdampfer bzw. Brennkammerwand, Glühstift) zuvor gebildete Rußpartikel bzw. Rußvorläufer können diesen Prozess der homogenen Rußbildung beschleunigen.

In einer Verdampfer- bzw. Brennkammer gebildeter Ruß kann die Verdampfer- und Brenneigenschaften nachteilig beeinflussen, so dass höhere Emissionen an Ruß, CO, Kohlenwasserstoffen, Rauch, Aerosolen sowie polyzyklischen Aromaten entstehen können. Somit ist der regelmäßige Einsatz von Regenerationsstrategien erforderlich, um eine Beseitigung des Rußes aus der Verdampferkammer bzw. Brennkammer zu erreichen. Der Rußabbau erfolgt meist durch Abbrennen und erfordert somit eine entsprechende Auslegung der Brennkammer. Da dieser Prozess bei entsprechend hohen Temperaturen stofftransportkontrolliert ist, werden hohe Kontaktzeiten von Ruß und Oxidationsmittel in der Brennkammer benötigt, was hohe Brennkammervolumina nach sich ziehen kann. Weiterhin können außergewöhnlich hohe Temperaturen an den Brennkammeroberflächen auftreten, deren Werkstoff- und Materialeigenschaften nachteilig beeinflussen und die Lebensdauer herabsetzen.

Die an den Metallfaservliesen und deren Umgebung gemessenen Temperaturen von bis zu 1100 °C stellen zudem sehr hohe Anforderungen an die Materialbeständigkeit der Metallfasern und der benachbarten Komponenten (z. B. Glühstift, Mischkammer).

Im Unterschied zur Kraftstoffverdampfung mittels Metallfaservliesen beruht das "Kalte-Flamme-Prinzip" gemäß EP 1 102 949 B1 auf einer Kraftstoffverdampfung in einem auf ca. 300 °C vorgewärmten Luftstrom. Die dabei einsetzenden Oxidationsreaktionen sind Gleichgewichtsreaktionen mit Sauerstoffumsätzen unter 20 %, so dass das erzeugte Gasgemisch eine Austrittstemperatur von ca. 480°C aufweist.

Kalte-Flamme-Verdampfer weisen den Nachteil auf, dass die Verdampferluft mittels einer weiteren Systemkomponente (z. B. elektrische Beheizung, Brenner) auf Temperaturen von ca. 300 bis 500°C erhitzt werden muss, damit die Kalte-Flamme-Reaktion (Niedertemperaturoxidation) einsetzen kann. Somit kann die spontane Selbstzündung des Brennstoff-Luft-Gemisches, welche bei höheren Temperaturen auftritt, vermieden werden. Dennoch ist die Luftvorwärmung einem schnellen Kaltstart abträglich und erschwert einen dynamischen Betrieb.

Die mittels Verdampfer oder Düsen erzeugten Kraftstoff-Luft-Gemische können vor spontaner Selbstzündung im Verdampfer durch Flammenrückschlagsperren zwischen Verdampfer und nachgeschaltetem Reaktionsraum (Verbrennung, partielle Oxidation) bewahrt werden, was die Komplexität erhöht.

Die US 6,444,179 B1 beschreibt einen Reformer, in dem Brennstoff verdampft und in einer der Verdampfungszone nachgelagerten Mischzone mit gasförmigem Oxidationsmittel vermischt wird. Auf die Mischzone folgt dann eine Reaktionszone, die mehrere Katalysatorabschnitte aufweist. Diese Katalysatorabschnitte werden als monolithische Katalysatoren bezeichnet, die herkömmlicherweise als gepackte Strukturen ausgelegt sind.

Die US 2004/0009104 A1 zeigt einen Reformer mit einem Verdampfer, einer dem Verdampfer nachgelagerten Mischzone, welcher auch Oxidationsmittel zuführbar ist, sowie eine der Mischzone nachgelagerte Reaktionszone. In der Reaktionszone ist ein Katalysator angeordnet, wobei allerdings keine weiteren Angaben über die Gestalt des Katalysators gemacht werden.

In der US 2001/0026777 A1 ist ein Reformer beschrieben, der einen monolitischen Katalysator, also möglicherweise einen eine gepackte Struktur aufweisenden Katalysator, aufweist.

Der Erfindung liegt die Aufgabe zugrunde, eine Vorrichtung und ein Verfahren zum Bereitstellen eines homogenen Gemisches aus Brennstoff und Oxidationsmittel auf der Grundlage der Vliesverdampfung zur Verfügung zu stellen, so dass die Nachteile des Standes der Technik zumindest teilweise überwunden werden.

Die Erfindung baut auf der gattungsgemäßen Vorrichtung dadurch auf, dass der Reaktionszone eine Homogenisierungszone nachgelagert ist, dass der Homogenisierungszone eine weitere Reaktionszone nachgelagert ist, und dass der weiteren Reaktionszone ein zusätzlicher Oxidationsmittelstrom zuführbar ist. An der Oberfläche und/oder innerhalb der gepackten Struktur laufen Oxidationsreaktionen ab, welche aufgrund ihrer Exothermie die gepackte Struktur auf Betriebstemperatur halten. Ein Teil der freiwerdenden Wärme wird in der dem Verdampfer nachgelagerten Verdampferzone zum Selbsterhalt des Verdampfungsprozesses verwendet; der Rest der Wärmeenergie wird mit dem Produktstrom konvektiv abgeführt. Vorzugsweise findet eine partielle Oxidation derjenigen Kraftstoffkomponenten (CₓH_{y}) statt, welche andernfalls eine Rußbildung hervorrufen können, zum Beispiel Aromaten und bei Raumtemperatur flüssige langkettige Kohlenwasserstoffe CₓH_{y} mit x>4. Die aus der gepackten Struktur austretenden Produkte, zum Beispiel restliche kurzkettige Kohlenwasserstoffe, Wasserstoff, Kohlenmonoxid, Wasser, Kohlendioxid, können in dieser, verglichen mit dem Kraftstoff/Luft-Gemisch vor der gepackten Struktur, deutlich einfacher zu einem homogenen Gemisch aufgearbeitet werden. Begünstigt wird dies unter anderem durch die im Vergleich zu den langkettigen Einsatzkomponenten deutlich größeren Diffusionskoeffizienten der erzeugten kleinen molekularen Spezies (z. B. Wasserstoff) und den höheren Flammengeschwindigkeiten. Durch die deutlich höheren Temperaturen der erzeugten Komponenten findet eine weitere Verbesserung des Stofftransportes und damit der Homogenität statt. Die Tendenz zur Rußbildung ist, verglichen mit der Mischkammer, aufgrund der geringen Konzentration an Kohlenwasserstoffen gering. Das entstandene Produktgemisch kann z. B. durch Zugabe eines zusätzlichen Oxidationsmittelstroms weiter oxidiert werden. Dadurch können Luftzahlen bis in den Bereich der Verbrennung erreicht werden.

Nützlicherweise ist vorgesehen, dass die gepackte Struktur als keramischer zylindrischer Formkörper ausgebildet ist der einen Durchmesser zwischen 25 und 35 mm und eine axiale Länge zwischen 15 und 50 mm Länge aufweist. Die gepackte Struktur passt somit in ihren Abmessungen zu dem kompakten Aufbau der erfindungsgemäßen Vorrichtung. Der Durchmesser liegt beispielsweise bei 30mm, und die axiale Länge liegt zum Beispiel bei 20mm. Neben der Verwendung keramischer Materialien, beispielsweise Cordierith, sind auch metallische gepackte Strukturen möglich. Bei der Verwendung keramischer Materialien kommen zum Beispiel Oxide von Silizium, Aluminium, Alkalimetallen (z. B. Natrium), Erdalkalimetallen (z. B. Magnesium), Schwermetallen (z. B. Barium) seltenen Erden (z. B. Yttrium) beziehungsweise Mischungen davon in Frage. Eine bevorzugte Keramik ist beispielsweise Cordierith. Weiterhin können auch nicht oxidische Keramiken, wie zum Beispiel Carbide (z. B. Siliziumcarbid) beziehungsweise Nitride eingesetzt werden. Gepackte Strukturen aus metallischen Materialien werden meist aus gewickelten Metallfolien (z. B. Stahl aus FeCrAlloy) hergestellt. Die Stapelung von Metallgeweben, Metallnetzen oder ähnlichem zu einer gepackten Struktur ist ebenso möglich.

Nützlicherweise ist vorgesehen, dass die gepackte Struktur im Querschnitt quadratische Strömungskanäle mit einer Zelldichte zwischen 400 und 1200 cpsi aufweist. Neben quadratischen Strömungskanälen sind auch hexagonale, dreieckige, runde und gewellte Strömungskanäle möglich. Die Kanäle können parallel verlaufen oder zufällig (ähnlich wie bei einem Schwamm) angeordnet sein. Neben den vielfältigen Formen, die gepackte Strukturen aufweisen können, zum Beispiel rund, rechteckig, "racetrack", sind auch die Gestaltungsmöglichkeiten im Hinblick auf die Zelldichten unterschiedlich. Beispielsweise sind Zelldichten im Bereich von 400 cpsi (cells per square inch) vorteilhaft, während Zelldichten bis ca. 1200 cpsi derzeit möglich sind.

Nützlicherweise ist vorgesehen, dass die Oberfläche der gepackten Struktur zumindest teilweise eine Beschichtung als Katalysator aufweist. Beispielsweise kann eine Edelmetallbeschichtung vorgesehen sein. Die Oberfläche der Strömungskanäle der gepackten Struktur kann durch Beschichtung (z. B. Washcoat: Schichtdicken einige µm) um Größenordnungen erhöht und katalytisch aktiviert werden. Dadurch ist die Durchführung von katalytischen Reaktionen bei technisch relevanten Reaktionsgeschwindigkeiten möglich. Die Selektivität zu den gewünschten partiellen Oxidationsprodukten (z. B. CO und H₂) kann durch Einsatz einer geeigneten katalytisch aktiven gepackten Struktur erhöht werden. Letzteres kann für die katalytische Wasserstofferzeugung (partielle Oxidation, autotherme Reformierung, "steam reforming") genutzt werden. Typische Washcoat-Materialien sind Oxide von Aluminium, Silizium, Titan. Gängige Katalysatoren sind Edelmetalle, wie zum Beispiel Pt, Pd, Ni, etc.

Die erfindungsgemäße Vorrichtung ist ferner in nützlicher Weise dadurch weitergebildet, dass sie in der Mischkammer mit einer definierten Luftzahl unterhalb von 0,5 betreibbar ist. Auf diese Weise kann die Vorrichtung betrieben werden, ohne dass eine spontane Zündung auftritt. Somit kann der Anteil an Oxidationsreaktionen und indirekt auch das Ausmaß an endothermen Crackreaktionen in der Mischkammer gering gehalten werden. Breits gezündete Gemische können gezielt zum Verlöschen gebracht werden.

Weiterhin ist die Vorrichtung in vorteilhafter Weise dadurch weitergebildet, dass sie in einer zwischen dem Verdampfer und der Mischzone angeordneten Verdampfungszone mit Temperaturen betreibbar ist, die dem Siedeende des verwendeten Brennstoffs entsprechende Temperaturen nicht beziehungsweise nur unwesentlich überschreiten. Das Siedeende liegt bei Dieselkraftstoff bei circa 360 °C. Wird dieses nicht überschritten, ist der Anteil an thermischen Crackprodukten, welche zur Rußbildung führen, entsprechend gering. Durch die geringen Temperaturen besteht eine minimale Tendenz zur spontanen Selbstzündung des Kraftstoff/Luft-Gemisches. Die geringen Temperaturen können dazu führen, dass durch eine kinetische Limitierung weniger Ruß gebildet wird als nach thermodynamischen Gleichgewichtsberechnungen zu erwarten wäre.

Weiterhin ist es bevorzugt, dass die Verdampfungszone und die Mischzone ein Volumen aufweisen, so dass mittlere Verweilzeiten des Brennstoff-Oxidationsmittel-Gemisches in der Größenordnung der Reaktionszeiten von Oxidationsreaktionen liegen. Hierdurch besteht eine minimale Tendenz zur spontanen Selbstzündung des Kraftstoff/Luft-Gemisches. Die kurzen Verweilzeiten können dazu führen, dass durch die geringen Kontaktzeiten weniger Ruß gebildet wird als nach thermodynamischen Gleichgewichtsberechnungen zu erwarten wäre.

Die Erfindung baut auf dem gattungsgemäßen Verfahren dadurch auf, dass der Reaktionszone eine Homogenisierungszone und der Homogenisierungszone eine weitere Reaktionszone nachgelagert ist, wobei der weiteren Reaktionszone ein zusätzlicher Oxidationsmittelstrom zugeführt wird. Auf diese Weise werden die Vorteile und Besonderheiten der erfindungsgemäßen Vorrichtung auch im Rahmen eines Verfahrens umgesetzt. Dies gilt auch im Hinblick auf die bevorzugten Ausführungsformen der erfindungsgemäßen Vorrichtung beziehungsweise der sich daraus ergebenden bevorzugten Verfahrensmerkmale.

Den beschriebenen Ausführungsformen liegt die Erkenntnis zugrunde, dass durch die Bereitstellung einer gepackten Struktur, insbesondere in Kombination mit weiteren Merkmalen der Vorrichtung, Nachteile des Standes der Technik zumindest teilweise überwunden werden können. So kann der Verdampfer durch die definierte Einstellung der Luftzahl in der Mischkammer so betrieben werden, dass sich dort definiert niedrige Temperaturen ausbilden, aufgrund derer eine spontane Selbstzündung vermieden werden kann. Durch die geringen Temperaturen besteht eine geringe Tendenz zur Rußbildung, z. B. veranlasst durch Crackreaktionen. Gemischbildungs- und Oxidationszone sind dann quasi separiert, so dass keine Flammenrückschlagsperre notwendig wird. Die Temperaturen im Verdampfer sind sehr niedrig und nahezu leistungsunabhängig, so dass die thermische Beanspruchung der umgebenden Komponenten entsprechend niedrig ist. Die Kohlenwasserstoffe können in einer ersten Reaktionsstufe mittels eines Katalysators selektiv partiell oxidiert werden. Nicht selektive Reaktionswege, insbesondere Cracking und Rußbildung, können so minimiert werden. Der Einsatz einer nichtkatalytischen ersten Reaktionsstufe hat den Vorteil, dass die erste Reaktionsstufe bei höheren Temperaturen betrieben werden kann, da Katalysatoren bei zu hohen Temperaturen deaktivieren können. Die Bildung der gewünschten Reaktionsprodukte kann aufgrund der definierten Luftzahl gezielt gesteuert werden. Der gewählte Aufbau zwingt alle gasförmigen beziehungsweise eventuell mit dem Gas vermischten flüssigen Kohlenwasserstoffmoleküle, im Unterschied zu einer offenen Flamme bei Verbrennungsreaktionen, durch die gepackte Struktur zu strömen und zu reagieren. In Verbindung mit den hohen Temperaturen resultieren damit sehr hohe Konversionsraten bzw. kompakte Abmessungen. Das in der ersten Reaktionsstufe entstandene wasserstoffreiche Gasgemisch kann dann unter weitestgehender Vermeidung von Ruß wesentlich einfacher als das Kohlenwasserstoff-Luft-Gemisch homogenisiert werden, da die Konzentration an Kohlenwasserstoffen (potentielle Crackkandidaten) um Größenordnungen geringer ist. Zusätzlich kann eine Homogenisierung innerhalb eines deutlich erweiterten Betriebsbereiches durchgeführt werden (bei höheren Temperaturen und Verweilzeiten). Anschließend kann das wasserstoffreiche Gasgemisch einer weiteren Reaktionszone zugeführt werden. Aufgrund der Homogenität der Mischung kann die entsprechende Reaktionszone sehr kompakt ausfallen und eine gleichmäßige Produktgaszusammensetzung garantieren. Z. B. kann das wasserstoffreiche Gasgemisch emissionsarm weiter oxidiert werden. Aufgrund der Homogenität der Mischung kann die entsprechende Brenn/Reaktionskammer sehr kompakt ausfallen.

Die Erfindung wird nun mit Bezug auf die begleitenden Zeichnungen anhand besonders bevorzugter Ausführungsformen beispielhaft erläutert.

Dabei zeigt:
- Figur 1: eine schematische Darstellung einer ersten Ausfüh- rungsform eines Systems zur Bereitstellung eines homogenen Kraftstoff-Luft-Gemisches ausgehend von flüssigem Kraftstoff;
- Figur 2: eine schematische Darstellung einer zweiten Aus- führungsform eines Systems zur Bereitstellung ei- nes homogenen Kraftstoff-Luft-Gemisches ausgehend von flüssigem Kraftstoff;
- Figur 3: eine graphische Darstellung von Temperatur- und Leistungswerten, die in einer erfindungsgemäßen Vorrichtung auftreten, in Abhängigkeit der Zeit; und
- Figur 4: die freie Enthalpie von ausgewählten Kohlenwasser- stoffen und den Elementen Kohlenstoff und Wasser- stoff als Funktion der Temperatur.

Bei der nachfolgenden Beschreibung der bevorzugten Ausführungsformen der Erfindung bezeichnen gleiche Bezugszeichen gleiche oder vergleichbare Komponenten.

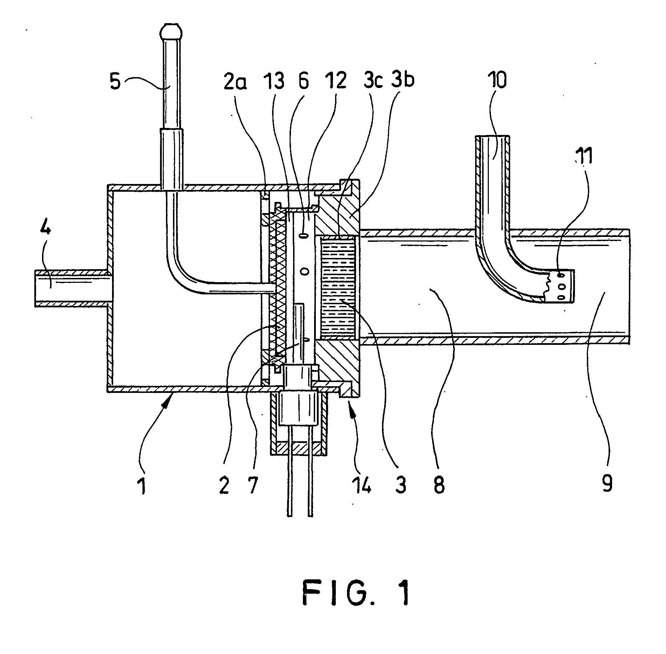

Figur 1 zeigt eine schematische Darstellung einer ersten Ausführungsform eines Systems zur Bereitstellung eines homogenen Kraftstoff-Luft-Gemisches ausgehend von flüssigem Kraftstoff. Den Kern des in Figur 1 exemplarisch dargestellten Systems zur Bereitstellung eines Brennstoff-Luft-Gemisches, ausgehend von flüssigem Kraftstoff, bildet der in einer Verdampferaufnahme 1 angeordnete Kraftstoffverdampfer 2. An der Verdampferaufnahme angesetzt ist ein Halteelement 3b zur Aufnahme einer gepackten Struktur 3, welche mit einer Fasermatte 3c zur mechanischen Fixierung bzw. thermischen Isolation ummantelt sein kann. Flüssiger Brennstoff bzw. Oxidationsmittel werden über die Oxidationsmittelzuführung 4 bzw. die Brennstoffzuführung 5 dem System zugeführt. Das Oxidationsmittel, bevorzugt Luft und optionale Zusätze wie z. B. Wasserdampf, tritt über Bohrungen 6 radial nach innen gerichtet in die Mischkammer 12 ein, wo eine Vermischung des Oxidationsmittels mit dem in der der Mischkammer 12 vorgelagerten Verdampferkammer 13 verdampften Brennstoff stattfindet. Im Allgemeinen bilden die Verdampferkammer 13 und die Mischkammer 12 ein einheitliches Volumen, wobei die Verdampfung eher stromaufwärts und die Vermischung eher stromabwärts stattfindet. Allerdings können auch Rückströmungen in Richtung des Kraftstoffverdampfers stattfinden, so dass auch dort bereits eine Vermischung von Kraftstoff und Luft stattfinden kann. Weiterhin kann, begünstigt durch die geringen Temperaturen auf dem Metallvlies, die Verdampfung von Hochsiedern in der Verdampferkammer 13 unvollständig erfolgen, so dass dies dann in der Mischkammer 12 stattfindet, da der Kraftstoff in Richtung der beispielsweise 900 °C heißen gepackten Struktur 3 strömt. Die Oxidation des Kraftstoff-Luft-Gemisches erfolgt wahlweise durch ein elektrisches Zündelement 7 bzw. durch die gepackte Struktur 3. Die an die die gepackte Struktur 3 enthaltende Reaktionszone 14 anschließende Zone 8 dient zur Homogenisierung der entstandenen Oxidationsprodukte. Das homogenisierte Gasgemisch kann anschließend innerhalb der weiteren Reaktionszone 9, z. B. durch eine Zufuhr von Oxidationsmittel über eine weitere Oxidationsmittelzuführung 10, weiter umgewandelt werden. Die Art der Zuführung beeinflusst maßgeblich den Stoff- und Wärmetransport in der Reaktionszone 9. Mittels radialer Bohrungen 11 werden z. B. die Reaktionsprodukte an die Wand transportiert, so dass ein Teil der Reaktionswärme einfach an die Umgebung abgegeben werden kann; auf diese Weise wird verhindert, dass die der Reaktionszone 9 nachgelagerten Komponenten überhitzen.

Das System zur Bereitstellung eines Brennstoff-Luft-Gemisches kann je nach Applikationsanforderung bei verschiedenen Umgebungstemperaturen betrieben werden. Bei sehr hohen Umgebungstemperaturen (> 400 °C) besteht die Gefahr, dass zu viel Wärme in den Kraftstoffverdampfer eingetragen und damit Crackreaktionen (z. B. im Vlies) angetrieben werden. Dementsprechend sind im Allgemeinen moderate Umgebungstemperaturen vorteilhaft. Sind dennoch die Anforderungen an den Kraftstoffverdampfer aufgrund der Applikation derart, dass dieser in einer heißen Umgebung betrieben werden muß, sind Maßnahmen zur thermischen Isolation des Verdampfers vorteilhaft, wie im Folgenden beschrieben wird. In diesem Fall ist es vorteilhaft, dass die mit dem Bezugszeichen 2a und 3b gekennzeichneten Bereiche eine geringe Wärmeleitfähigkeit aufweisen bzw. die Wärmeleitung auf das Vlies konstruktiv minimiert wird. Diese kann beispielsweise durch die Wahl dünner Stege im Bereich des Bezugszeichens 2a minimiert werden. Weiterhin kann vorteilhaft sein, dass zwischen den Bereichen 2 und 3b ein in Figur 1 nicht dargestellter thermischer Isolator vorgesehen ist, beispielsweise eine Keramikscheibe. Weiterhin ist eine thermische Isolation des Verdampfers möglich und gegebenenfalls angebracht. Dies gilt gleichermaßen für den Oxidationsmittel- und Kraftstoffpfad.

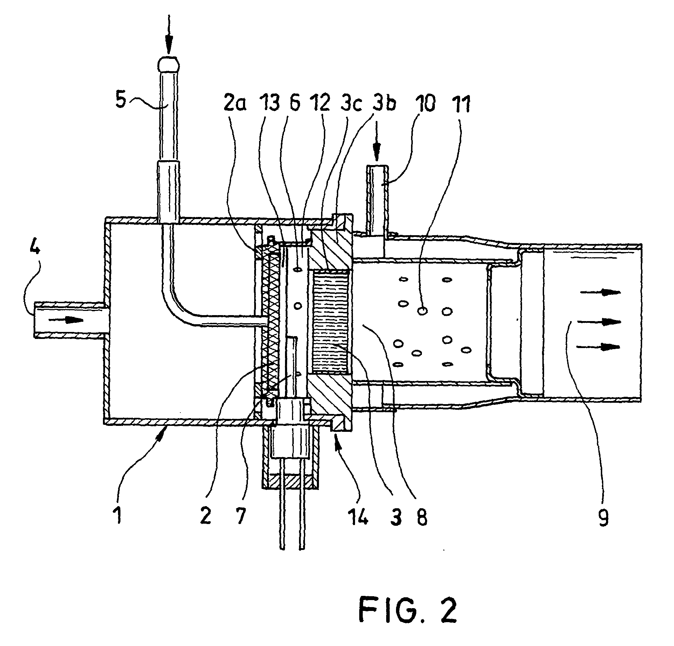

Figur 2 zeigt eine schematische Darstellung einer zweiten Ausführungsform eines Systems zur Bereitstellung eines homogenen Kraftstoff-Luft-Gemisches ausgehend von flüssigem Kraftstoff. Im Unterschied zu Figur 1 ist die Zufuhr des Oxidationsmittelstroms in der zweiten Reaktionszone mehrfach gestuft und radial nach innen gerichtet.

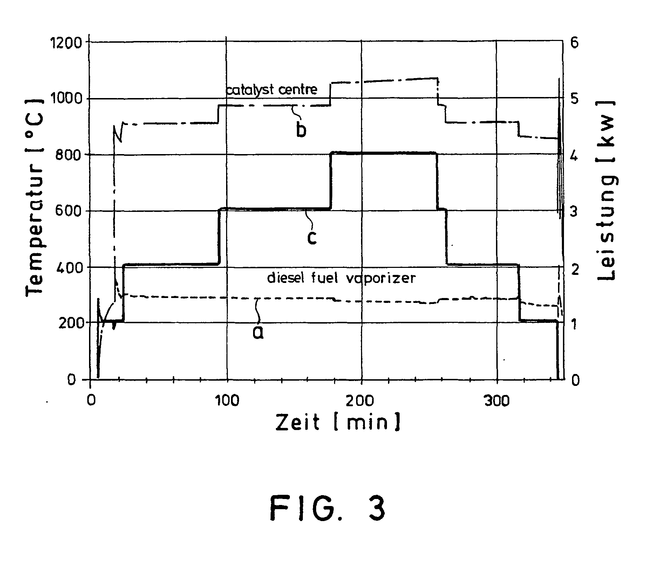

Figur 3 zeigt eine graphische Darstellung von Temperatur- und Leistungswerten, die in einer erfindungsgemäßen Vorrichtung auftreten, in Abhängigkeit der Zeit. Es werden exemplarische Ergebnisse mit einem solchen System bei der Dieselverdampfung in Luft dargestellt. Die eingesetzte gepackte Struktur enthält einen Katalysator, welcher den Diesel partiell oxidiert, so dass ein wasserstoffreiches Gasgemisch entsteht. Dieses kann in einem Brennstoffzellensystem wie z. B. einer Auxiliary Power Unit (APU) zur Strom- und Wärmeerzeugung genutzt werden. Figur 3 stellt die gemessenen Temperaturen in der Verdampferkammer (Kurve a) sowie dem Katalysator (Kurve b) bei thermischen Leistungen (Kurve c) zwischen 1 und 4 kW sowie einer Luftzahl von 0,3 bis 0,35 dar. Wie ersichtlich ist, beträgt die Temperatur in der Verdampferkammer ca. 300 °C. Trotz der hohen Temperatur im Zentrum des Katalysators (max. 1100 °C) findet keine Rückzündung des Kraftstoff-Luft-Gemisches innerhalb der Mischkammer statt. Selbst bei einer Vergrößerung der Verweilzeit innerhalb der Mischkammer (Reduktion der thermischen Leistung von 4 auf 1 kW) ist keine Zündung zu beobachten, so dass ein stabiler Betrieb realisiert werden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Verdampferelement
- 2: Kraftstoffverdampfer
- 2a: Steg
- 3: gepackte Struktur
- 3b: Halteelement
- 3c: Fasermatte
- 4: Oxidationsmittelzuführung
- 5: Brennstoffzuführung
- 6: Bohrungen
- 7: elektrisches Zündelement
- 8: Homogenisierungszone
- 9: Reaktionszone
- 10: Reaktions-/Oxidationsmittelzuführung
- 11: Bohrung
- 12: Mischzone/Mischkammer
- 13: Verdampfungszone/Verdampferkammer
- 14: Reaktionszone

## Patentansprüche

1. Vorrichtung zum Bereitstellen eines homogenen Gemisches aus Brennstoff und Oxidationsmittel und zum Oxidieren des Brennstoffs, mit
- Mitteln (5) zum Zuführen von flüssigem Brennstoff zu einem Verdampfer,
- Mitteln (4) zum Zuführen von gasförmigem Oxidationsmittel in eine dem Verdampfer nachgelagerte Mischzone und
- einer der Mischzone (12) nachgelagerten Reaktionszone,
- wobei in der Reaktionszone (14) eine gepackte Struktur (3) angeordnet ist,
**dadurch gekennzeichnet,**
- **dass** der Reaktionszone (14) eine Homogenisierungszone (8) nachgelagert ist,
- **dass** der Homogenisierungszone (8) eine weitere Reaktionszone (9) nachgelagert ist, und
- **dass** der weiteren Reaktionszone (9) ein zusätzlicher Oxidationsmittelstrom zuführbar ist.

2. Vorrichtung nach Anspruch 1, **dadurch gekennzeichnet, dass** die gepackte Struktur (3) als keramischer zylindrischer Formkörper ausgebildet ist der einen Durchmesser zwischen 25 und 35 mm und eine axiale Länge zwischen 15 und 50 mm Länge aufweist.

3. Vorrichtung nach Anspruch 1 oder 2, **dadurch gekennzeichnet, dass** die gepackte Struktur (3) im Querschnitt quadratische Strömungskanäle mit einer Zelldichte zwischen 400 und 1200 cpsi aufweist.

4. Vorrichtung nach einem der vorhergehenden Ansprüche, **dadurch gekennzeichnet, dass** die Oberfläche der gepackten Struktur (3) zumindest teilweise eine Beschichtung als Katalysator aufweist.

5. Vorrichtung nach einem der vorhergehenden Ansprüche, **dadurch gekennzeichnet, dass** sie in der Mischkammer (12) mit einer definierten Luftzahl unterhalb von 0,5 betreibbar ist.

6. Vorrichtung nach einem der vorhergehenden Ansprüche, **dadurch gekennzeichnet, dass** sie in einer zwischen dem Verdampfer (2) und der Mischzone (12) angeordneten Verdampfungszone (13) mit Temperaturen betreibbar ist, die dem Siedeende des verwendeten Brennstoffs entsprechende Temperaturen nicht beziehungsweise nur unwesentlich überschreiten.

7. Vorrichtung nach Anspruch 8, **dadurch gekennzeichnet, dass** die Verdampfungszone (13) und die Mischzone (12) ein Volumen aufweisen, so dass mittlere Verweilzeiten des Brennstoff-Oxidationsmittel-Gemisches in der Größenordnung der Reaktionszeiten von Oxidationsreaktionen liegen.

8. Verfahren zum Bereitstellen eines homogenen Gemisches aus Brennstoff und Oxidationsmittel und zum Oxidieren des Brennstoffs, mit den Schritten:
- Zuführen von flüssigem Brennstoff zu einem Verdampfer (2),
- Zuführen von gasförmigem Oxidationsmittel und verdampftem Brennstoff in eine dem Verdampfer (2) nachgelagerte Mischzone (12),
- Vermischen von Oxidationsmittel und Brennstoff in der Mischzone (12) und
- Einleiten des in der Mischzone (12) entstandenen Gemisches in eine Reaktionszone (14),
- wobei in der Reaktionszone (14) eine gepackte Struktur (3) angeordnet ist, durch die das gesamte Gemisch beziehungsweise bereits entstandene Reaktionsprodukte hindurchgeleitet werden,
**dadurch gekennzeichnet, dass** der Reaktionszone (14) eine Homogenisierungszone (8) und der Homogenisierungszone (8) eine weitere Reaktionszone (9) nachgelagert ist, wobei der weiteren Reaktionszone (9) ein zusätzlicher Oxidationsmittelstrom zugeführt wird.

## Claims

1. A device for providing a homogenous mixture of fuel and oxidant and for oxidizing the fuel, including
means (5) for feeding liquid fuel to an evaporator,
- means (4) for feeding gaseous oxidant into a mixing zone downstream of the evaporator, and
- a reaction zone downstream of the mixing zone (12),
- wherein in the reaction zone (14) a packed structure (3) is arranged,
**characterized in that**
- the reaction zone (14) is followed by a homogenization zone (8),
- the homogenization zone (8) is followed by a further reaction zone (9), and
- a further oxidant flow is feedable to the further reaction zone (9).

2. The device as set forth in claim 1, **characterized in that** the packed structure (3) is configured as a ceramic cylindrical molding having a diameter in the range 25 to 35 mm and an axial length in the range 15 to 50 mm.

3. The device as set forth in claim 1 or 2, **characterized in that** the packed structure (3) features flow conduits square in cross-section having a cell density in the range 400 to 1200 cpsi.

4. The device as set forth in any of the preceding claims, **characterized in that** the surface of the packed structure (3) comprises at least in part a coating as a catalyst.

5. The device as set forth in any of the preceding claims, **characterized in that** it is operable in the mixing chamber (12) with a defined air ratio below 0.5.

6. The device as set forth in any of the preceding claims, **characterized in that** it is operable in an evaporation zone (13) between the evaporator (2) and the mixing zone (12) at temperatures not exceeding, or only insignificantly, the end boiling point of the fuel used.

7. The device as set forth in claim 6, **characterized in that** the volume of the evaporation zone (13) and of the mixing zone (12) is engineered so that the residence times of the fuel oxidant mixture on an average are of the magnitude of the reaction times of oxidation reactions.

8. A method for providing a homogenous mixture of fuel and oxidant and for oxidizing the fuel, including the steps:
- feeding liquid fuel to an evaporator (2),
- feeding gaseous oxidant and evaporated fuel into a mixing zone (12) downstream of the evaporator,
- mixing oxidant and fuel in the mixing zone (12) and
- introducing the mixture having materialized in the mixing zone (12) into a reaction zone (14),
- wherein a packed structure (3) is arranged in the reaction zone (14) through which the mixture in its entirety, respectively the reaction products having already materialized, are passed,
**characterized in that** the reaction zone (14) is followed by a homogenization zone (8) and the homogenization zone (8) is followed by a further reaction zone (9), wherein a further oxidant flow is fed to the further reaction zone (9).

## Revendications

1. Dispositif pour mettre à disposition un mélange homogène de combustible et d'oxydant et pour oxyder le combustible, comportant
- des moyens (5) pour alimenter un évaporateur en combustible liquide,
- des moyens (4) pour alimenter une zone de mélange, qui est située en aval de l'évaporateur, en oxydant gazeux et
- une zone de réaction en aval de la zone de mélange (12),
- où dans la zone de réaction (14) est située une structure compactée (3),
**caractérisé en ce que**
- la zone de réaction (14) est suivie d'une zone d'homogénéisation (8),
- la zone d'homogénéisation (8) est suivie d'une autre zone de réaction (9) et
- l'autre zone de réaction (9) est alimentable par un flux d'oxydant additionnel.

2. Dispositif selon la revendication 1, **caractérisé en ce que** la structure compactée (3) est configurée en corps de moulage cylindrique céramique qui possède un diamètre entre 25 et 35 mm et une longueur axiale entre 15 et 50 mm.

3. Dispositif selon la revendication 1 or 2, **caractérisé en ce que** la structure compactée (3) comporte des conduits d'écoulement de section transversale quadratique avec une densité de cellule entre 400 et 1200 cpsi.

4. Dispositif selon l'une quelconque des revendications précédentes, **caractérisé en ce que** la surface de la structure compactée (3) comporte au moins en partie un revêtement catalyseur.

5. Dispositif selon l'une quelconque des revendications précédentes, **caractérisé en ce qu'**il est utilisable dans la chambre de mélange (12) avec un rapport d'air défini inférieur à 0.5.

6. Dispositif selon l'une quelconque des revendications précédentes, **caractérisé en ce qu'**il est utilisable dans une zone d'évaporation (13) située entre l'évaporateur (2) et la zone de mélange (12) à des températures qui ne dépassent pas, ou seulement de manière insignifiante, le point d'ébullition final du combustible utilisé.

7. Dispositif selon la revendication 6, **caractérisé en ce que** la zone d'évaporation (13) et la zone de mélange (12) possèdent un volume de sorte que les temps d'exposition moyens du mélange de combustible et d'oxydant sont de l'ordre de grandeur des temps de réaction de réactions d'oxydation.

8. Procédé pour mettre à disposition un mélange homogène de combustible et d'oxydant et pour oxyder le combustible, comportant les étapes:
- alimenter un évaporateur (2) en combustible liquide,
- alimenter une zone de mélange (12), qui est située en aval de l'évaporateur, en oxydant gazeux et en combustible évaporé,
- mélanger de l'oxydant et du combustible dans la zone de mélange (12) et
- introduire le mélange qui s'est formé dans la zone de mélange (12) dans une zone de réaction (14),
- où dans la zone de réaction (14) est située une structure compactée (3) à travers laquelle le mélange entier ou bien des produits de réaction qui se sont déjà formés sont passés,
**caractérisé en ce que** la zone de réaction (14) est suivie d'une zone d'homogénéisation (8), la zone d'homogénéisation (8) est suivie d'une autre zone de réaction (9) et l'autre zone de réaction (9) est alimentée par un autre flux d'oxydant.
